# EUROPEAN PATENT APPLICATION

(11) **EP 4 563 981 A1**
(43) Date of publication of application: **04.06.2025**
(21) Application number: 24211440.3
(22) Date of filing: 07.11.2024
(51) Int. Cl.: G01N 21/64, G01N 21/84, G01N 21/77

(54) **MULTI-WAVELENGTH DETECTING APPARATUS**

(30) Priority: 20.11.2023 KR 20230159988; 19.01.2024 KR 20240008810
(71) Applicant: SG Medical, Inc., Seoul 05548 (KR)
(72) Inventor: KIM, Hee Seung, 16919 Yongin-si, Gyeonggi-do (KR); LEE, Kang Sup, 10082 Gimpo-si, Gyeonggi-do (KR)
(74) Representative: Bittner, Thomas L.

(57) **Abstract**

A multi-wavelength detecting apparatus is disclosed. The multi-wavelength detecting apparatus includes a first condenser lens, a detection unit, a rotating tray, a first optical filter, a second optical filter, a third optical filter, a first rib, a second rib, a first detection sensor, a second detection sensor, and a controller. The first detection sensor is configured to generate a first signal indicating on or off according to whether one of the first rib and the second rib is detected, the second detection sensor is configured to generate a second signal indicating on or off according to whether one of the first rib and the second rib is detected, and the controller is configured to control the rotation of the rotating tray according to the first signal and the second signal. The present disclosure may provide a multi-wavelength detecting apparatus which can easily perform control such that the first optical filter, the second optical filter, or the third optical filter is positioned on a first optical axis.

## Description

### Field of the invention

The present disclosure relates to a multi-wavelength detecting apparatus and, more specifically, to an apparatus which includes a plurality of optical filters configured to transmit light of different wavelengths, and detects light having transmitted through a selected optical filter.

### Description of the Prior Art

Immunochromatography assays are used as an analysis method using antigen-antibody reactivity, and are used for material analysis, pregnancy testing, disease screening, diagnosis, and the like.

Rapid diagnostic test kits based on lateral flow assays (LFA), which are a typical immunochromatography method, are widely used.

Laser-induced fluorescence detection is used as a method for detecting fluorescence in biochips such as DNA chips or protein chips. In laser-induced fluorescence detection, the intensity of fluorescence emitted when a fluorescent material, which enters into an excited state by using a laser as an excitation light source of a wavelength absorbed by the fluorescent material, returns back to a ground state from the excited state is measured, thereby identifying the concentration from the intensity of the fluorescence. In the method described above, quantitative analysis may be performed by attaching a fluorescent material to a DNA or protein sample.

Among the devices that detect fluorescence by using the laser-induced fluorescence detection, the most widely used device is a confocal laser scanning device (confocal laser scanning system). This device employs a laser as a light source and receives a fluorescence signal emitted from a sample by using a separate special detector called a photomultiplier tube, and then converts the fluorescence signal into a digital image by using an A/D converter.

The confocal laser scanning device emits, by using a laser light source, only light of a wavelength appropriate for a fluorescent material labeled on a sample, thereby inducing the emission of fluorescence.

Recently, biochip detection devices equipped with multiple fluorescence filters with different detection wavelengths have been introduced, enabling detection of multiple fluorescent lights in a single detection device.

Many mechanical parts are required when one fluorescent filter is selected from among a plurality of fluorescent filters to place the selected one fluorescent filter on a predetermined optical axis. Therefore, development of a device capable of accurately placing each fluorescent filter while reducing the number of parts is required.

### Summary of the invention

The present disclosure provides a multi-wavelength detecting apparatus having a compact structure, wherein the number of detection sensors configured to detect whether one of a plurality of optical filters is placed on a predetermined optical axis may be minimized and the position of each optical filter is smoothly and accurately switched.

A multi-wavelength detecting apparatus according to an embodiment of the present disclosure includes a first condenser lens configured to concentrate light from a test kit, a detection unit configured to detect incident light, a rotating tray disposed between the first condenser lens and the detection unit and configured to be rotatable about a rotation axis in parallel to a first optical axis forming a path of light, a first optical filter, a second optical filter, and a third optical filter, which are coupled to the rotating tray to be arranged along a first circumference intersecting the first optical axis and having the rotation axis as a center and are configured to transmit light of different wavelengths, a first rib and a second rib, which are arranged on the rotating tray, and respective centers of which are spaced apart from each other on a second circumference having the rotation axis as the center thereof, a first detection sensor configured to generate a first signal indicating on or off according to whether one of the first rib and the second rib is detected, a second detection sensor configured to generate a second signal indicating on or off according to whether one of the first rib and the second rib is detected, and a controller configured to control rotation of the rotating tray according to the first signal and the second signal.

The multi-wavelength detecting apparatus further includes a fourth optical filter coupled to the rotating tray to be disposed along the first circumference and configured to transmit light of a wavelength different from those transmitted by the first, second, and third optical filters, wherein the first optical filter, the second optical filter, the third optical filter, and the fourth optical filter may be arranged such that respective centers thereof are spaced an equal interval of angle A apart from each other, and respective centers of the first rib and the second rib may be spaced an interval of angle A apart from each other.

The respective centers of the first optical filter, the second optical filter, the third optical filter, and the fourth optical filter may be spaced an interval of 90° apart from each other, and the respective centers of the first rib and the second rib may be spaced an interval of 90° apart from each other.

The multi-wavelength detecting apparatus may further include a driving motor, and a driving gear coupled to the driving motor to rotate, wherein the rotating tray may have gear teeth formed on the outer peripheral surface of the rotating tray so as to rotate in engagement with the driving gear.

The driving motor may be configured as a step motor and may be configured to rotate the rotating tray by a multiple of angle A.

The first rib and the second rib may protrude in parallel to the rotation axis from the edge of the rotating tray, and each of the first detection sensor and the second detection sensor may include a light-emitting unit, a light-receiving unit configured to receive light from the light-emitting unit, and a detection space as a space between the light-emitting unit and the light-receiving unit, the first and second ribs moving in the detection space.

The first rib and the second rib may be continuously connected to each other.

The first rib and the second rib may be continuously formed in a range of angle A arranged about the rotation axis, and the first rib and the second rib may be connected to each other. The respective centers of the first detection sensor and the second detection sensor may be positioned to be spaced apart from the first optical axis by angle A or angle 2A about the rotation axis.

The first rib and the second rib may protrude in parallel to the first optical axis from the edge of the rotating tray, and each of the first detection sensor and the second detection sensor may include a light-emitting unit, a light-receiving unit configured to receive light from the light-emitting unit, and a detection space as a space between the light-emitting unit and the light-receiving unit, the first and second ribs moving in the detection space.

The first optical filter may be arranged on the first optical axis when the first signal indicates off and the second signal indicates on, the second optical filter may be arranged on the first optical axis when the first signal indicates on and the second signal indicates off, and the third optical filter may be arranged on the first optical axis when the first signal and the second signal indicate on.

The first optical filter may be arranged on the first optical axis when the first signal and the second signal indicate off, the second optical filter may be arranged on the first optical axis when the first signal indicates off and the second signal indicates on, the third optical filter may be arranged on the first optical axis when the first signal and the second signal indicate on, and the fourth optical filter may be arranged on the first optical axis when the first signal indicates on and the second signal indicates off.

A multi-wavelength detecting apparatus according to an embodiment of the present disclosure includes a first condenser lens configured to concentrate light from a test kit, a detection unit configured to detect incident light, a rotating tray disposed between the first condenser lens and the detection unit and configured to be rotatable about a rotation axis in parallel to a first optical axis forming a path of light, a plurality of optical filters coupled to the rotating tray to be arranged at an equal interval along a first circumference intersecting the first optical axis and having the rotation axis as a center, the plurality of optical filters being configured to transmit light of different wavelengths, a plurality of ribs arranged on the rotating tray to be spaced apart from each other on a second circumference having the rotation axis as a center, a plurality of detection sensors configured to generate a signal indicating on or off according to whether one of the plurality of ribs is detected, and a controller configured to control rotation of the rotating tray according to a signal from the detection sensor, wherein the plurality of optical filters include N optical filters (N is four or more), and the plurality of ribs and the plurality of detection sensors include (N-2) ribs and (N-2) detection sensors, respectively, and are arranged such that an interval between the adjacent centers thereof is 360°/N.

A multi-wavelength detecting apparatus according to an embodiment of the present disclosure includes a first condenser lens configured to concentrate light from a test kit, a detection unit configured to detect incident light, a rotating tray disposed between the first condenser lens and the detection unit and configured to be rotatable about a rotation axis in parallel to a first optical axis forming a path of light, a plurality of optical filters coupled to the rotating tray to be arranged at an equal interval along a first circumference intersecting the first optical axis and having the rotation axis as a center, the plurality of optical filters being configured to transmit light of different wavelengths, a plurality of ribs arranged on the rotating tray to be spaced apart from each other on a second circumference having the rotation axis as a center, a plurality of detection sensors configured to generate a signal indicating on or off according to whether one of the plurality of ribs is detected, and a controller configured to control rotation of the rotating tray according to a signal from the detection sensor, wherein the plurality of ribs and the plurality of detection sensors include M ribs and M detection sensors, respectively, the number of optical filters (N) is greater than M and equal to or less than 2M, and the ribs and the detection sensors may be respectively arranged such that an interval between the adjacent centers thereof is 360°/N.

The multi-wavelength detecting apparatus may further include a light source configured to emit light, and a second condenser lens configured to concentrate light from the light source such the light is emitted to the test kit.

An embodiment of the present disclosure may provide a multi-wavelength detecting apparatus which can minimize the number of detection sensors for detecting whether one of optical filters is placed on a first optical axis, enables smooth and accurate position switching of each optical filter, and has a compact structure.

### Brief Description of the Drawings

The above and other aspects, features and advantages of the present disclosure will be more apparent from the following detailed description taken in conjunction with the accompanying drawings, in which:
- FIG. 1: schematically illustrates a multi-wavelength detecting apparatus according to an embodiment of the present disclosure.
- FIG. 2: is a plan view illustrating a partial configuration of the multi-wavelength detecting apparatus illustrated in FIG. 1.
- FIG. 3: is a perspective view illustrating a partial configuration of the multi-wavelength detecting apparatus illustrated in FIG. 1.
- FIG. 4A: illustrates a partial configuration of a multi-wavelength detecting apparatus according to an embodiment of the present disclosure, and
- FIGS. 4B and 4C: each illustrate the partial configuration of FIG. 4A in which a rotating tray is rotated.
- FIG. 5A: illustrates a partial configuration of a multi-wavelength detecting apparatus according to an embodiment of the present disclosure, and
- FIGS. 5B, 5C, and 5D: each illustrate the partial configuration of FIG. 5A in which a rotating tray is rotated.
- FIG. 6: illustrates a partial configuration of a multi-wavelength detecting apparatus according to an embodiment of the present disclosure.
- FIG. 7A, FIG. 7B, FIG. 7C, and FIG. 7D: each illustrate an operation of rotating a rotating tray in a multi-wavelength detecting apparatus according to an embodiment of the present disclosure.

### Detailed Description of the exemplary Embodiments

Hereinafter, in order to explain the present disclosure more specifically, embodiments according to the present disclosure will be described in more detail with reference to the attached drawings. Throughout the detailed description, the same reference numerals represent the same components.

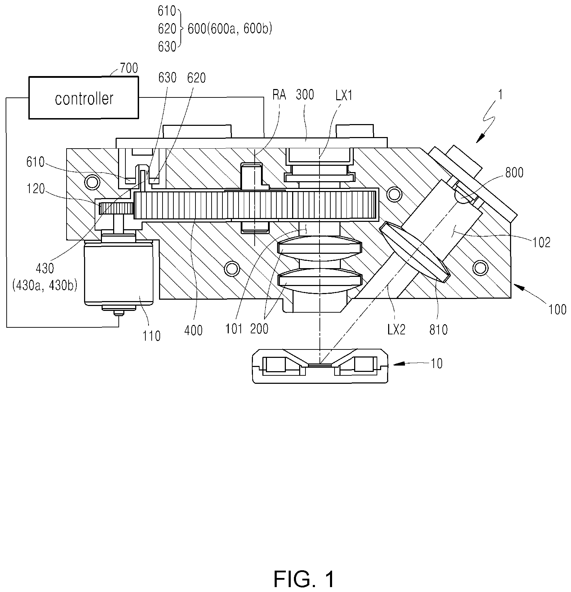

FIG. 1 schematically illustrates a multi-wavelength detecting apparatus 1 according to an embodiment of the present disclosure. In FIG. 1, a cross-section of a main body 100 is illustrated to show the internal configurations of the main body 100.

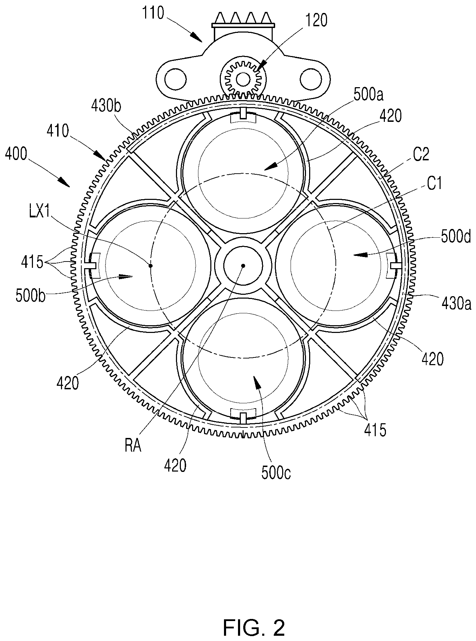

FIG. 2 is a plan view illustrating a partial configuration of the multi-wavelength detecting apparatus 1 illustrated in FIG. 1.

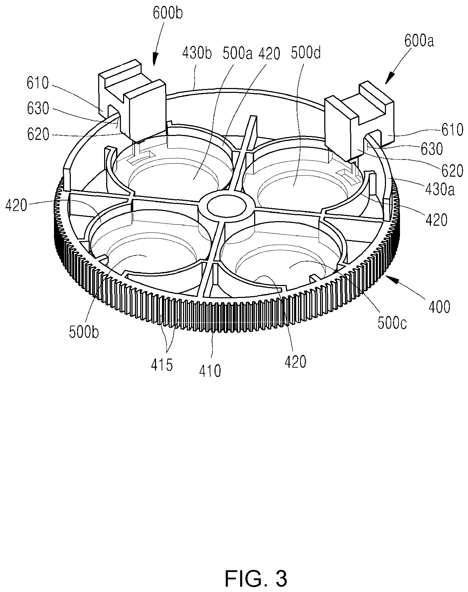

FIG. 3 is a perspective view illustrating a partial configuration of the multi-wavelength detecting apparatus 1 illustrated in FIG. 1.

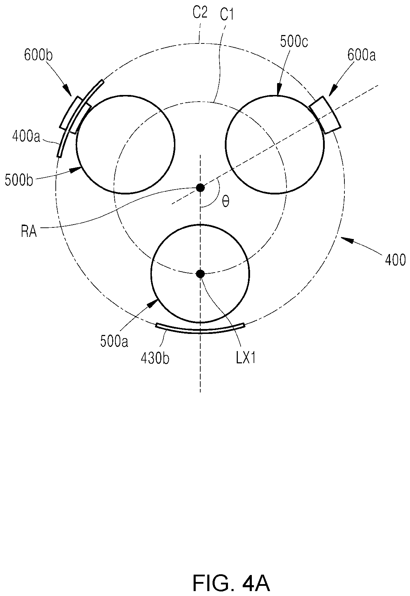

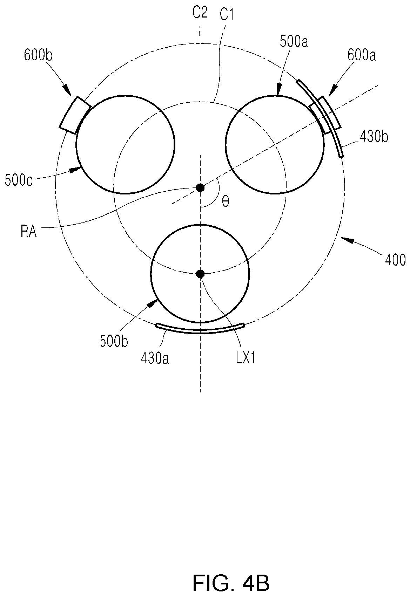

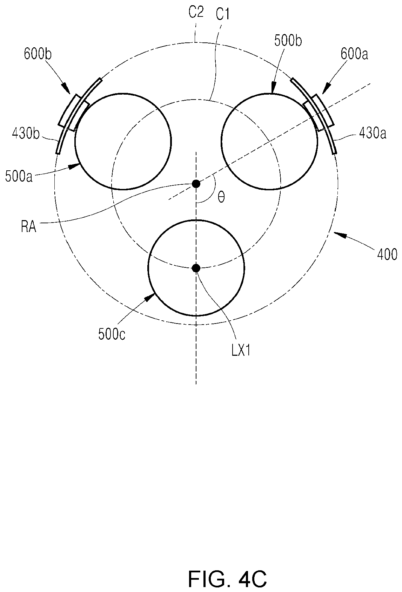

FIG. 4A illustrates a partial configuration of the multi-wavelength detecting apparatus 1 according to an embodiment of the present disclosure, and FIGS. 4B and 4C each illustrate the partial configuration of FIG. 4A in which a rotating tray 400 is rotated.

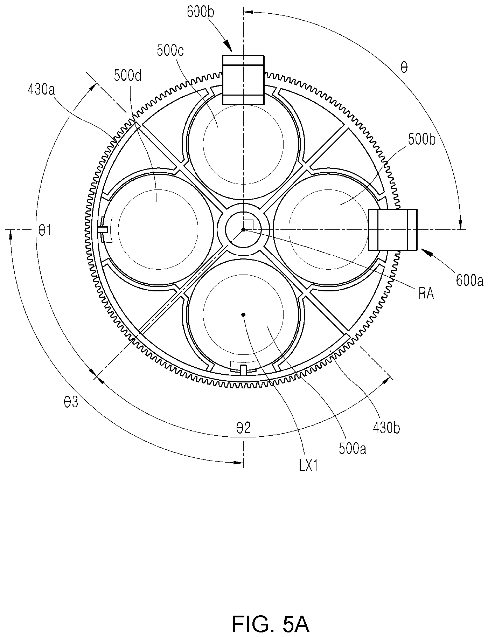

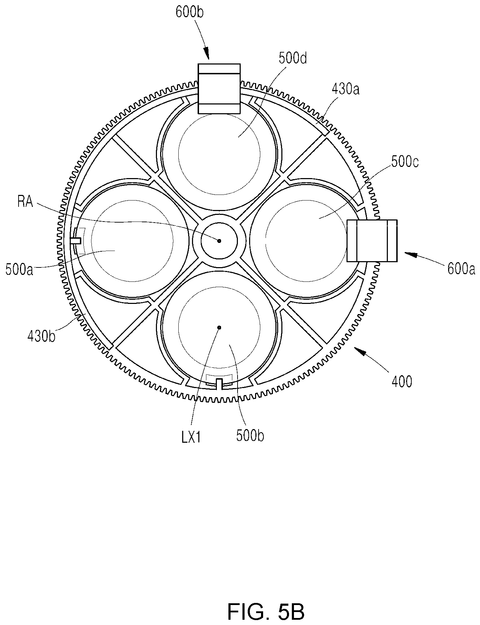

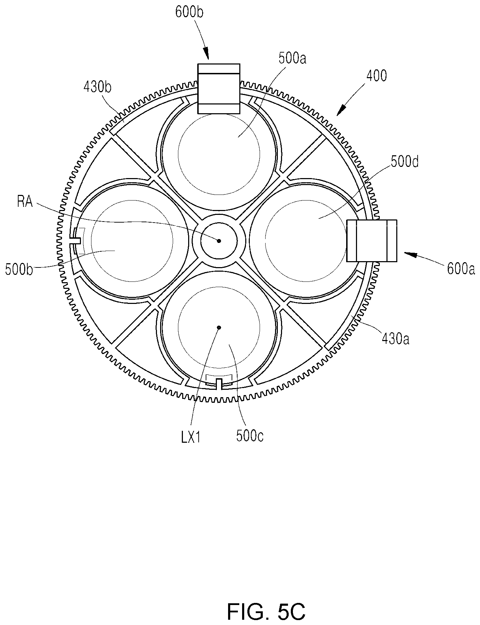

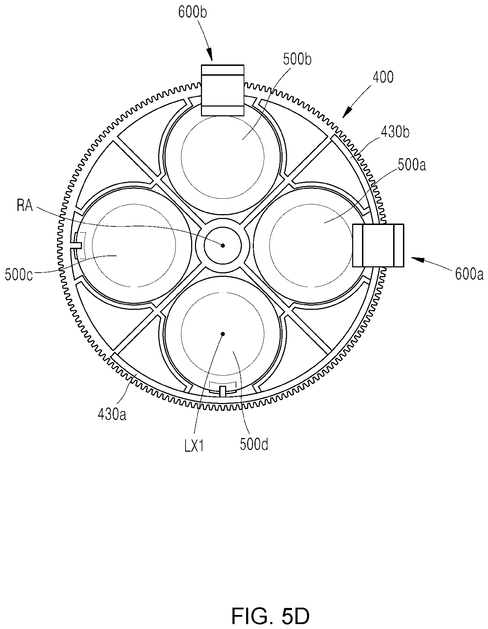

FIG. 5A illustrates a partial configuration of the multi-wavelength detecting apparatus 1 according to an embodiment of the present disclosure, and FIGS. 5B, 5C, and 5D each illustrate the partial configuration of FIG. 5A in which the rotating tray 400 is rotated.

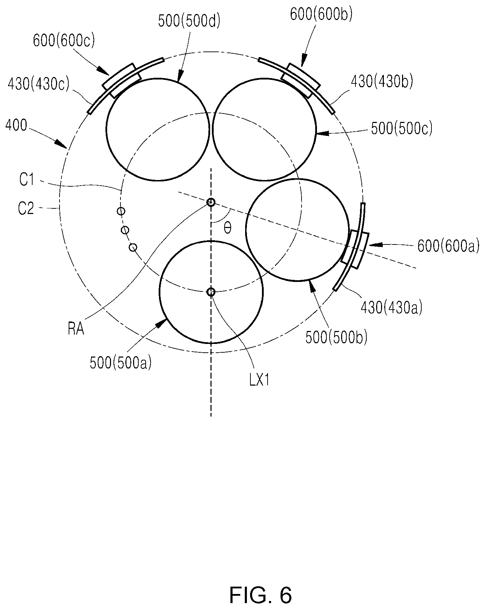

FIG. 6 illustrates a partial configuration of a multi-wavelength detecting apparatus 1 according to an embodiment of the present disclosure. In FIG. 6, the number of optical filters 500 arranged along a first circumference C1 may be four or more. In FIG. 6, each of the numbers of ribs 430 and detection sensors 600 arranged along a second circumference C2 may be three or more.

The multi-wavelength detecting apparatus 1 according to an embodiment of the present disclosure may be used to analyze a material included in a test kit 10.

The test kit 10 includes a sample and a fluorescent material.

The multi-wavelength detecting apparatus 1 according to an embodiment of the present disclosure may be used to analyze the sample and/or the fluorescent material included in the test kit 10.

The fluorescent material described in an embodiment of the present disclosure may include quantum dots.

The test kit 10 may be configured as a diagnostic strip based on lateral flow assays (LFA) or may include the same.

The test kit 10 may be configured as a biochip or may include the same.

The multi-wavelength detecting apparatus 1 according to an embodiment of the present disclosure is configured to detect multiple fluorescent lights. Multiple lights having different wavelengths are generated according to the type and characteristics of the fluorescent material included in the test kit 10, and the multi-wavelength detecting apparatus 1 is configured to detect multiple fluorescent lights distinguished by each wavelength.

The multi-wavelength detecting apparatus 1 according to an embodiment of the present disclosure may be itself an independent apparatus or may be used in combination with another apparatus.

The multi-wavelength detecting apparatus 1 according to an embodiment of the present disclosure may include a main body 100, a first condenser lens 200, a detection unit 300, a rotating tray 400, multiple optical filters 500, multiple ribs 430, multiple detection sensors 600, and a controller 700.

The optical filters 500, 500a, 500b, 500c, and 500d described in an embodiment of the present disclosure are configured to selectively transmit light of a specific wavelength, and the plurality of optical filters 500, 500a, 500b, 500c, and 500d are configured to selectively transmit light of different wavelengths.

The ribs 430, 430a, 430b, and 430c described in an embodiment of the present disclosure are disposed on the rotating tray 400 and are located on the second circumference C2. The rib 430 may be defined as a first rib 430a or may be defined as a second rib 430b.

The detection sensors 600, 600a, 600b, and 600c described in an embodiment of the present disclosure are coupled to the main body 100 and configured to detect the rib 430, 430a, 430b, or 430c. The detection sensor 600 may be defined as a first detection sensor 600a or may be defined as a second detection sensor 600b.

In an embodiment, the multi-wavelength detecting apparatus 1 may include, as three optical filters 500, a first optical filter 500a, a second optical filter 500b, and a third optical filter 500c, and may also include the first rib 430a, the second rib 430b, the first detection sensor 600a, and the second detection sensor 600b.

In another embodiment, the multi-wavelength detecting apparatus 1 may include N optical filters 500 (N is a natural number) and may include (N-2) ribs 430, and (N-2) detection sensors 600.

In another embodiment, the multi-wavelength detecting apparatus 1 may include M ribs 430, M detection sensors 600 (M is a natural number), and N optical filters 500, wherein the number of optical filters 500 (N) is greater than M and equal to or less than 2M. For example, when three ribs 430 and three detection sensors 600 are provided, either four optical filters 500 or eight optical filters 500 may be provided. In addition, for example, when four ribs 430 and four detection sensors 600 are provided, either five optical filters 500 or sixteen optical filters 500 may be provided.

When N optical filters 500 are provided, the optical filters 500, the ribs 430, and the detection sensors 600 may be respectively arranged such that an interval between the adjacent centers thereof is 360°/N.

The multi-wavelength detecting apparatus 1 may include four or more optical filters 500.
In an embodiment, the multi-wavelength detecting apparatus 1 may include four optical filters 500, two ribs 430, and two detection sensors 600.

In an embodiment, the multi-wavelength detecting apparatus 1 may include five optical filters 500, three ribs 430, and three detection sensors 600.

In the multi-wavelength detecting apparatus 1 according to an embodiment of the present disclosure, the number of detection sensors 600 may be provided smaller than the number of optical filters 500, and even in this case, each optical filter 500 may be effectively controlled to be located on the first optical axis LX1. In the multi-wavelength detecting apparatus 1 according to an embodiment of the present disclosure, when four different optical filters 500 are provided, each optical filter 500 may be effectively controlled to be located on the first optical axis LX1 by two detection sensors 600 (the first detection sensor 600a and the second detection sensor 600b).

In an embodiment of the present disclosure, when N optical filters 500 are provided, the ribs 430 and the detection sensors 600 may include (N-2) ribs 430 and (N-2) detection sensors 600, respectively, and be arranged such that an interval between the adjacent centers thereof is 360°/N.

In an embodiment, the multi-wavelength detecting apparatus 1 includes the main body 100, the first condenser lens 200, the detection unit 300, the rotating tray 400, the first optical filter 500a, the second optical filter 500b, the third optical filter 500c, the first rib 430a, the second rib 430b, the first detection sensor 600a, the second detection sensor 600b, and the controller 700.

The multi-wavelength detecting apparatus 1 may further include a driving motor 110 and a driving gear 120.

The multi-wavelength detecting apparatus 1 may further include a light source 800 and a second condenser lens 810.

The main body 100 constitutes the overall structure of the multi-wavelength detecting apparatus 1, and the components of the multi-wavelength detecting apparatus 1 are coupled to the main body 100.

The light source 800 is configured to emit light, and the light emitted from the light source 800 is emitted toward the test kit 10. In an embodiment of the present disclosure, the light source 800 may be configured as a UV LED. The light source 800 may be fixedly coupled to a point of the main body 100.

The second condenser lens 810 is fixedly connected to the main body 100, and the second condenser lens 810 is positioned in front of the light source 800 with reference to the path of light. The second condenser lens 810 is configured to concentrate light from the light source 800 such that the light is emitted to the test kit 10. The second condenser lens 810 may be configured as a single lens or may be configured in a combination of multiple lenses.

The light emitted to the test kit 10 may be reflected from the test kit 10 and be incident toward the first condenser lens 200.

The first condenser lens 200 is fixedly coupled to the main body 100 and configured to concentrate the light from the test kit 10.

The first condenser lens 200 may be configured as a single lens or may be configured in a combination of multiple lenses.

The detection unit 300 is coupled to the main body 100 and configured to detect light. The detection unit 300 is configured to detect light transmitted through the first condenser lens 200. In addition, the detection unit 300 is configured to detect light transmitted through one of the optical filters 500.

The detection unit 300 may have the form of a printed circuit board (PCB) overall. The detection unit 300 may include a photo diode. The detection unit 300 may include a photo interrupt sensor.

The detection unit 300 may be configured to obtain a fluorescence image from the light (reflected light) from the test kit 10 and convert the image into a detection signal, which is an electrical signal.

The controller 700 includes a central processing unit (CPU), which is a computer controlling apparatus. The controller 700 may be provided inside or outside the main body 100.

The controller 700 may receive a detection signal from the detection unit 300 and control each component of the multi-wavelength detecting apparatus 1, based on the detection signal.

The controller 700 may receive a signal from the first detection sensor 600a and/or the second detection sensor 600b and control each component of the multi-wavelength detecting apparatus 1, based on the signal.

The controller 700 controls the driving motor 110.

The rotating tray 400 is disposed between the first condenser lens 200 and the detection unit 300. In an embodiment, the first condenser lens 200, the rotating tray 400, and the detection unit 300 may be continuously arranged from the lower side toward the upper side. The rotating tray 400 is configured to be rotatable about a rotation axis RA in parallel to the first optical axis LX1 configuring the path of light. The rotating tray 400 is coupled to the main body 100 to be rotatable with respect thereto.

The first optical axis LX1 is an optical axis that configures the path of light and configures the optical axis of light transmitted through the first condenser lens 200.

The first optical axis LX1 may coincide with the optical axis of the first condenser lens 200. In an embodiment of the present disclosure, light incident onto the test kit 10 may be incident along the second optical axis LX2. The second optical axis LX2 may configure the path of light emitted from the light source 800 and may coincide with the optical axis of the second condenser lens 810.

The first optical axis LX1 and the second optical axis LX2 may have a predetermined inclination configured with respect to each other.

When the first optical axis LX1 is configured in the vertical direction, the second optical axis LX2 may configure a predetermined inclination with respect to the vertical direction.

The main body 100 may include a first channel 101 as a passage for the movement of light along the first optical axis LX1, and a second channel 102 as a passage for the movement of light along the second optical axis LX2.

The first optical axis LX1 and the rotation axis RA may be parallel to each other.

In an embodiment of the present disclosure, a circle having the rotation axis RA as the center thereof and having, as a radius (first radius), the length from the rotation axis RA to the first optical axis LX1 is referred to as the first circumference C1.

The first circumference C1 intersects the first optical axis LX1. When the first circumference C1 is configured along a horizontal plane, the first optical axis LX1 may be configured along the vertical direction.

The rotating tray 400 is larger than the first circumference C1. The rotation axis RA may be located at the center of the rotating tray 400.

In an embodiment of the present disclosure, the first rib 430a and the second rib 430b are positioned to be identically distant from the center of the rotation axis RA. That is, the length from the rotation axis RA to the first rib 430a is equal to the length from the rotation axis RA to the second rib 430b.

The length from the rotation axis RA to the first rib 430a may be longer than the length from the rotation axis RA to the first optical axis LX1. Similarly, the length from the rotation axis RA to the second rib 430b may be longer than the length from the rotation axis RA to the first optical axis LX1.

In an embodiment of the present disclosure, a circle having the rotation axis RA as the center thereof and having, as a radius (second radius), the length from the rotation axis RA to the first rib 430a is referred to as the second circumference C2. A circle having the rotation axis RA as the center thereof and having, as a radius, the length from the rotation axis RA to the second rib 430b is also referred to as the second circumference C2.

The rotating tray 400 may have a size identical or similar to that of the second circumference C2.

The rotating tray 400 may have a circular shape overall. The rotating tray 400 may have the axial thickness relatively thin compared to the diameter thereof.

In an embodiment of the present disclosure, the first rib 430a and the second rib 430b may protrude in a direction in parallel to the rotation axis RA from the edge of the rotating tray 400.

When the rotation axis RA is parallel to the vertical direction, the first rib 430a and the second rib 430b may protrude in the vertical direction from the edge of the rotating tray 400. The first rib 430a and the second rib 430b may integrally protrude from a gear unit 410 to be in parallel to the rotation axis RA.

The first rib 430a and the second rib 430b each may have a plate shape configuring an arc having the rotation axis RA as the center thereof.

The first rib 430a and the second rib 430b are each disposed in the circumferential direction of the rotating tray 400 to be in a predetermined angular range. In the circumferential direction of the rotating tray 400, the angular range (θ1) configured by the first rib 430a and the angular range (θ2) configured by the second rib 430b may be identical to each other.

The height of the first rib 430a protruding from the edge (the gear unit 410) of the rotating tray 400 may be uniform in the circumferential direction of the rotating tray 400.

The height of the second rib 430b protruding from the edge (the gear unit 410) of the rotating tray 400 may be uniform in the circumferential direction of the rotating tray 400.

The height of the first rib 430a protruding from the edge (the gear unit 410) of the rotating tray 400 may be identical to the height of the second rib 430b protruding from the edge (the gear unit 410) of the rotating tray 400.

A plurality of filter coupling unit 420 are provided on the rotating tray 400. Each filter coupling unit 420 is a part to which one of the optical filters 500 is coupled, and includes a hole disposed in the center thereof and penetrating the rotating tray 400 in the axial direction. Each filter coupling unit 420 is repeatedly configured along the first circumference C1. Each optical filter 500 is coupled to the corresponding coupling unit 420 to shield the penetrated hole of the filter coupling unit 420.

The gear unit 410 may be provided on the outer peripheral surface of the rotating tray 400. The gear unit 410 may be disposed over the entire outer peripheral surface of the rotating tray 400. The gear unit 410 includes gear teeth 415 continuously arranged in the circumferential direction of the rotating tray 400. The gear teeth 415 may be disposed over the entire outer peripheral surface of the rotating tray 400.

As described below, the gear teeth 415 of the gear unit 410 in the rotating tray 400 are configured to mesh with the driving gear 120, and accordingly, the rotating tray 400 rotates by the rotation of the driving motor 110.

The multi-wavelength detecting apparatus 1 according to an embodiment of the present disclosure includes the plurality of optical filters 500. Each optical filter 500 is configured to selectively transmit light of a specific wavelength and block light of a different wavelength.

The first optical filter 500a, the second optical filter 500b, and the third optical filter 500c, described in an embodiment of the present disclosure may be configured to selectively transmit light of wavelengths different from each other.

The first optical filter 500a, the second optical filter 500b, the third optical filter 500c, and the fourth optical filter 500d, described in an embodiment of the present disclosure may be configured to selectively transmit light of different wavelengths.

In an embodiment of the present disclosure, each optical filter 500 may be configured such that the transmitted wavelength is 430 nm for the first optical filter 500a, 530 nm for the second optical filter 500b, 630 nm for the third optical filter 500c, and 730 nm for the fourth optical filter 500d.

In an embodiment of the present disclosure, each optical filter 500 may be configured such that the central wavelength is 430 nm for the first optical filter 500a, 530 nm for the second optical filter 500b, 630 nm for the third optical filter 500c, and 730 nm for the fourth optical filter 500d.

In an embodiment of the present disclosure, the first optical filter 500a, the second optical filter 500b, and the third optical filter 500c are arranged along the first circumference C1. The centers of the first optical filter 500a, the second optical filter 500b, and the third optical filter 500c may be located on the first circumference C1.

In an embodiment of the present disclosure, the first optical filter 500a, the second optical filter 500b, the third optical filter 500c, and the fourth optical filter 500d are arranged along the first circumference C1. The centers of the first optical filter 500a, the second optical filter 500b, the third optical filter 500c, and the fourth optical filter 500d may be located on the first circumference C1.

The first rib 430a and the second rib 430b are arranged on the rotating tray 400 to be spaced apart from each other on the second circumference C2 having the rotation axis RA as the center.

The first rib 430a and the second rib 430b may be configured integrally with the rotating tray 400 or may be configured separately and then fixed to the rotating tray 400.

The first rib 430a and the second rib 430b are fixedly disposed (or coupled to) on the rotating tray 400 and are configured to rotate together with the rotating tray 400 with respect to the main body 100.

The first detection sensor 600a is configured to generate a first signal indicating on or off according to whether one of the first rib 430a and the second rib 430b is detected.

The second detection sensor 600b is configured to generate a second signal indicating on or off according to whether one of the first rib 430a and the second rib 430b is detected.

The first detection sensor 600a and the second detection sensor 600b are fixedly coupled to the main body 100.

Each of the first detection sensor 600a and the second detection sensor 600b may be formed of an optical sensor. The first detection sensor 600a and the second detection sensor 600b may be configured to have the same structure and operate in the same manner. Each of the first detection sensor 600a and the second detection sensor 600b may include a light-emitting unit 610, a light-receiving unit 620, and a detection space 630. The light-emitting unit 610 may include a light-emitting element, and the light-receiving unit 620 may be configured to receive light from the light-emitting unit 610.

The detection space 630 is a space between the light-emitting unit 610 and the light-receiving unit 620.

According to the rotation of the rotating tray 400, when the first rib 430a or the second rib 430b is positioned in the detection space 630, light from the light-emitting unit 610 may be blocked from being received by the light-receiving unit 620, and when the first rib 430a and the second rib 430b are not positioned in the detection space 630, light from the light-emitting unit 610 may be received by the light-receiving unit 620.

The first detection sensor 600a is configured to generate a first signal indicating on when the first rib 430a or the second rib 430b is positioned in the detection space 630 of the first detection sensor 600a and generate a first signal indicating off when the first rib 430a and the second rib 430b are not positioned in the detection space 630 of the first detection sensor 600a.

The second detection sensor 600b is configured to generate a second signal indicating on when the first rib 430a or the second rib 430b is positioned in the detection space 630 of the second detection sensor 600b and generate a second signal indicating off when the first rib 430a and the second rib 430b are not positioned in the detection space 630 of the second detection sensor 600b.

In an embodiment of the present disclosure, the controller 700 is configured to control the rotation of the rotating tray 400 according to the first signal and the second signal. Specifically, the controller 700 is configured to receive signals from the first detection sensor 600a and the second detection sensor 600b to control the rotation of the driving motor 110, whereby the rotation of the rotating tray 400 is controllable.

In an embodiment of the present disclosure, the plurality of optical filters 500 may be arranged at an equal interval of angle A (θ). At this time, the respective centers of the first rib 430a and the second rib 430b may configure angle A (θ).

In an embodiment of the present disclosure, the first optical filter 500a, the second optical filter 500b, and the third optical filter 500c may be arranged at an equal interval of angle A (θ). In an embodiment of the present disclosure, when three optical filters 500 (the first optical filter 500a, the second optical filter 500b, and the third optical filter 500c) are provided, angle A may be 120°, and the respective centers of the first optical filter 500a, the second optical filter 500b, and the third optical filter 500c may be spaced apart from each other on the first circumference C1 by an angle of 120°.

At this time, the first rib 430a and the second rib 430b may be arranged on the second circumference C2 such that the respective centers thereof configure an angle of 120°. In addition, the first detection sensor 600a and the second detection sensor 600b may be arranged such that the respective centers thereof configure an angle of 120°.

In an embodiment of the present disclosure, the first optical filter 500a, the second optical filter 500b, the third optical filter 500c, and the fourth optical filter 500d may be arranged at an equal interval of angle A (θ). In an embodiment of the present disclosure, when four optical filters 500 (the first optical filter 500a, the second optical filter 500b, the third optical filter 500c, and the fourth optical filter 500d) are provided, angle A may be 90°, and the respective centers of the first optical filter 500a, the second optical filter 500b, the third optical filter 500c, and the fourth optical filter 500d may be spaced apart from each other on the first circumference C1 by an angle of 90°.

At this time, the center of the first rib 430a and the center of the second rib 430b may configure an interval (θ3) of 90° on the second circumference C2, and the center of the first detection sensor 600a and the center of the second detection sensor 600b may configure an interval of 90°.

The driving motor 110 is fixedly coupled to the main body 100. The driving gear 120 is coupled to the driving motor 110 to rotate together when the driving motor 110 rotates and is configured to mesh with the gear teeth 415 of the rotating tray 400. One or more driving gear 120 may be provided.

In an embodiment of the present disclosure, the driving motor 110 may be configured as a step motor. The driving motor 110 may rotate in both directions. Accordingly, with reference to FIG. 2, by the rotation of the driving motor 110, the rotating tray 400 may rotate clockwise and may also rotate counterclockwise.

In an embodiment of the present disclosure, the controller 700 may control the drive motor 110 such that the rotating tray 400 rotates by a multiple of angle A. For example, the controller 700 may control the driving motor 110 such that the rotating tray 400 rotates by angle A, control the driving motor 110 such that the rotating tray 400 rotates by angle 2A, control the driving motor 110 such that the rotating tray 400 rotates by angle 3A, or control the driving motor 110 such that the rotating tray 400 rotates by angle 4A.

In an embodiment of the present disclosure, the step angle of the driving motor 110 may be 9°, and one rotation of the driving motor 110 may be made by 40 steps. At this time, the number of teeth of the driving gear 120 may be 17, the number of teeth of the gear unit 410 of the rotating tray 400 may be 177. In addition, the reduction ratio between the driving gear 120 and the rotating tray 400 may be about 10.4118.

In this case, for one rotation (360° rotation) of the rotating tray 400, the driving motor 110 may rotate about 416 steps, and for 90° rotation of the rotating tray 400, the driving motor 110 may rotate about 104 steps.

In an embodiment of the present disclosure, the first rib 430a and the second rib 430b may be continuously connected to each other. In an embodiment of the present disclosure, the first rib 430a is continuously configured in an angular range (θ1) equal to angle A about the rotation axis RA, and the second rib 430b is continuously configured in an angular range (θ2) equal to angle A about the rotation axis RA, and the first rib 430a and the second rib 430b may be connected to each other.

Due to the first rib 430a and the second rib 430b which are arranged continuously, during the rotation of the rotating tray 400, the detection of the rotational position of the rotating tray 400 by the first detection sensor 600a and the second detection sensor 600b may be performed more accurately without an error.

For example, when the rotating tray 400 rotates from a position as in FIG. 5B to a position as in FIG. 5C, in FIG. 5B, the first detection sensor 600a generates a first signal indicating off and the second detection sensor 600b generates a second signal indicating on, and in FIG. 5C, the first detection sensor 600a generates a first signal indicating on and the second detection sensor 600b generates a second signal indicating on. That is, when the rotating tray 400 rotates from a position as in FIG. 5B to a position as in FIG. 5C, the signal generated by the second detection sensor 600b is not switched, and only the signal generated by the first detection sensor 600a is switched, whereby the position of the rotating tray 400 is detectable.

On the other hand, when the point between the first rib 430a and the second rib 430b passes the first detection sensor 600a or the second detection sensor 600b during the rotation of the rotating tray 400 in case that the first rib 430a and the second rib 430b are separated and spaced from each other, the first detection sensor 600a may first generate the first signal indicating off and then generate the first signal indicating on, and the second detection sensor 600b may first generate the second signal indicating off and then generate the second signal indicating on. In this case, the detection of the rotational position of the rotating tray 400 through the first detection sensor 600a or the second detection sensor 600b may be difficult or may be complicated.

In an embodiment of the present disclosure, the first detection sensor 600a and the second detection sensor 600b may be positioned to be spaced apart from the first optical axis LX1 by angle A or angle 2A about the rotation axis RA. Accordingly, the first detection sensor 600a or the second detection sensor 600b may be prevented from being positioned close to the first optical axis LX1, and the first detection sensor 600a or the second detection sensor 600b may be prevented from blocking or interfering with the fluorescence passing through the first optical axis LX1.

In an embodiment of the present disclosure, three optical filters 500 may be provided at equal intervals (see FIGS. 4A to 4C). At this time, when the first signal indicates off and the second signal indicates on, the first optical filter 500a may be arranged on the first optical axis LX1, when the first signal indicates on and the second signal indicates off, the second optical filter 500b may be arranged on the first optical axis LX1, and when the first and second signals indicate on, the third optical filter 500c may be arranged on the first optical axis LX1. In the multi-wavelength detecting apparatus 1 according to an embodiment of the present disclosure configured as described above, the controller 700 may identify, according to the first signal and the second signal, the optical filter 500 which is arranged on the first optical axis LX1.

In an embodiment of the present disclosure, in case that four optical filters 500 are provided at equal intervals, the first optical filter 500a may be arranged on the first optical axis LX1 when the first signal and the second signal indicate off, the second optical filter 500b may be arranged on the first optical axis LX1 when the first signal indicates off and the second signal indicates on, the third optical filter 500c may be arranged on the first optical axis LX1 when the first signal and the second signal indicate on, and the fourth optical filter 500d may be arranged on the first optical axis LX1 when the first signal indicates on and the second signal indicates off. In the multi-wavelength detecting apparatus 1 according to an embodiment of the present disclosure configured as described above, the controller 700 may identify, according to the first signal and the second signal, the optical filter 500 which is arranged on the first optical axis LX1.

In the multi-wavelength detecting apparatus 1 according to an embodiment of the present disclosure, due to the optical filter 500, the rib 430, and the detection sensor 600, which are configured as described above, the position of each optical filter 500 according to the rotation of the rotating tray 400 may be accurately identified, and the optical filter 500 positioned on the first optical axis LX1 may be easily identified.

Table 1 below shows an example in which the controller 700 in the multi-wavelength detecting apparatus 1 according to an embodiment identifies the optical filter 500 positioned on the first optical axis LX1 according to the first signal by the first detection sensor 600a and the second signal by the second detection sensor 600b.

**[Table 1]**

| | | | | |
|---|---|---|---|---|
| First signal | 0 (off) | 0 (off) | 1 (on) | 1 (on) |
| Second signal | 0 (off) | 1 (on) | 1 (on) | 0 (off) |
| Optical filter arranged on first axis | First optical filter | Second optical filter | Third optical filter | Fourth optical filter |

As described above, an embodiment of the present disclosure may provide a multi-wavelength detecting apparatus 1 having a compact structure, wherein the number of detection sensors 600 configured to detect whether one of the optical filters 500 is placed on the first optical axis LX1 may be minimized and the position of each optical filter 500 is smoothly and accurately switched.

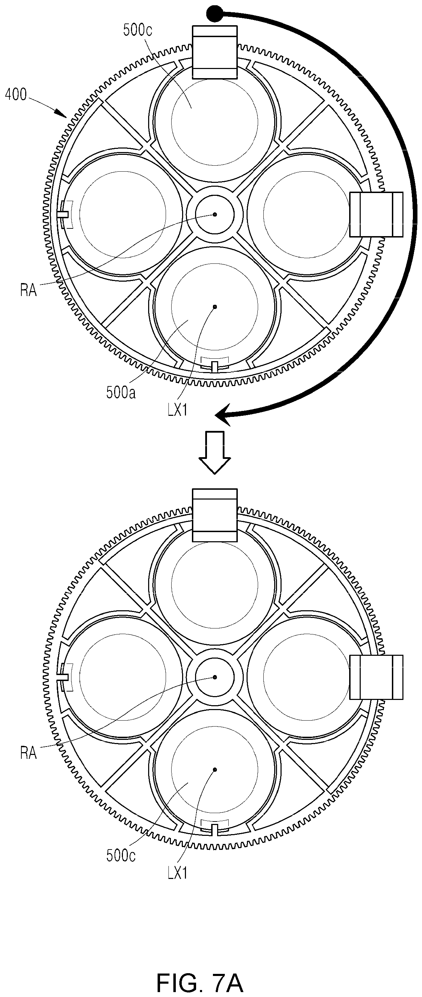

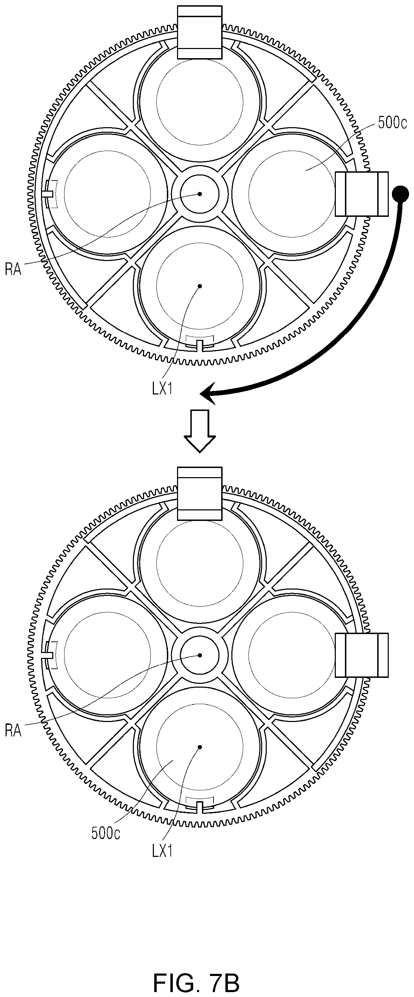

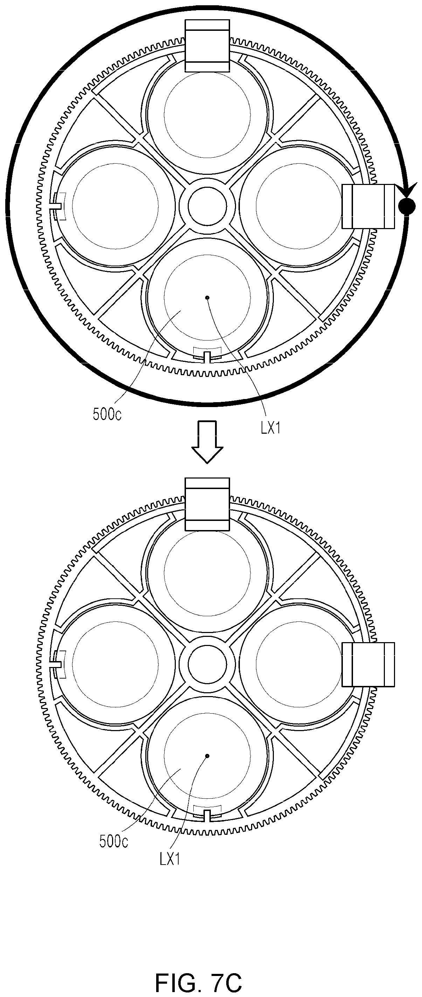

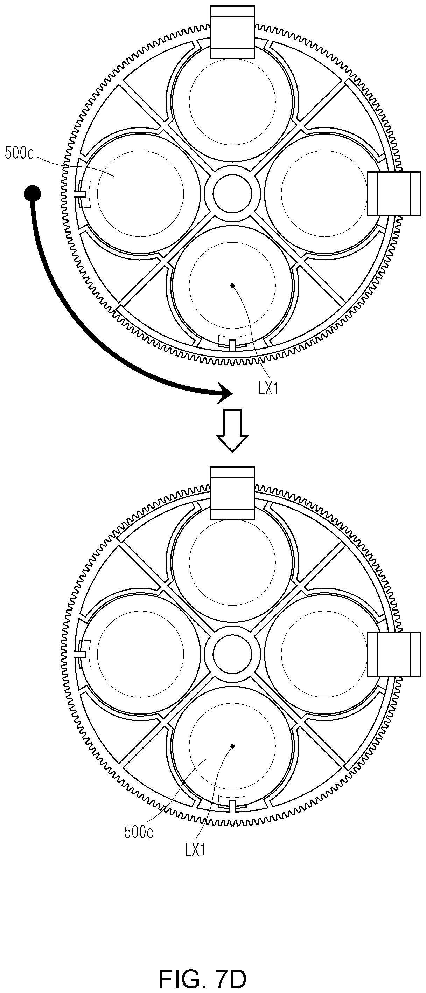

FIG. 7A, FIG. 7B, FIG. 7C, and FIG. 7D each illustrate an operation of rotating the rotating tray 400 in a multi-wavelength detecting apparatus 1 according to an embodiment of the present disclosure.

The multi-wavelength detecting apparatus 1 according to an embodiment of the present disclosure may perform initialization, and the rotating tray 400 may rotate such that one of the optical filters 500 is positioned on the first optical axis LX1 during initialization.

In an embodiment, the rotating tray 400 may rotate such that the third optical filter 500c is positioned on the first optical axis LX1 during initialization of the multi-wavelength detecting apparatus 1.

As shown in FIG. 7A, when the first optical filter 500a is positioned on the first optical axis LX1, the initialization is achieved by rotating the rotating tray 400 clockwise by 180°, as shown in FIG. 7B, when the third optical filter 500c is positioned at an angle of 90° counterclockwise from the first optical axis LX1, the initialization is achieved by rotating the rotating tray 400 clockwise by 90°, as shown in FIG. 7C, when the third optical filter 500c is positioned on the first optical axis LX1, the initialization is achieved by rotating the rotating tray 400 clockwise or counterclockwise by 360°, and as shown in FIG. 7D, when the third optical filter 500c is positioned at an angle of 90° clockwise from the first optical axis LX1, the initialization is achieved by rotating the rotating tray 400 counterclockwise by 90°.

Although specific embodiments of the present disclosure have been described and illustrated above, it will be understood that the present disclosure is not limited to the described embodiments, and that those skilled in the art will be able to variously modify and change other specific embodiments without departing from the spirit and scope of the present disclosure. Accordingly, the scope of the present disclosure should not be defined by the described embodiments, but should be defined by the technical idea described in the claims.

**<Descriptions of reference signs>**

| | | | |
|---|---|---|---|
| 1: | multi-wavelength detecting apparatus | | |
| 10: | Test kit | | |
| 100: | Main body | 101: | First channel |
| 102: | Second channel | 110: | Driving motor |
| 120: | Driving gear | 200: | First condenser lens |
| 300: | Detection unit | 400: | Rotating tray |
| 410: | Gear unit | 415: | Gear teeth |
| 420: | Filter coupling unit | 430: | Rib |
| 430a: | First rib | 430b: | Second rib |
| 500: | Optical filter | 500a: | First optical filter |
| 500b: | Second optical filter | | |
| 500c: | Third optical filter | | |
| 500d: | Fourth optical filter | | |
| 600: | Detection sensor | | |
| 600a: | First detection sensor | | |
| 600b: | Second detection sensor | | |
| 610: | Light-emitting unit | | |
| 620: | Light-receiving unit | | |
| 630: | Detection space | 700: | Controller |
| 800: | Light source | 810: | Second condenser lens |
| LX1: | First optical axis | LX2: | Second optical axis |
| RA: | Rotation axis | C1: | First circumstance |
| C2: | Second circumstance | | |

## Claims

1. A multi-wavelength detecting apparatus comprising:
- a first condenser lens configured to concentrate light from a test kit;
- a detection unit configured to detect incident light;
- a rotating tray disposed between the first condenser lens and the detection unit and configured to be rotatable about a rotation axis in parallel to a first optical axis forming a path of light;
- a first optical filter, a second optical filter, and a third optical filter which are coupled to the rotating tray, arranged along a first circumference intersecting the first optical axis and having the rotation axis as a center, and configured to transmit light of different wavelengths;
- a first rib and a second rib which are formed on the rotating tray, and arranged on a second circumference having the rotation axis as a center such that respective centers thereof are spaced apart from each other;
- a first detection sensor configured to generate a first signal indicating on or off according to whether one of the first rib and the second rib is detected;
- a second detection sensor configured to generate a second signal indicating on or off according to whether one of the first rib and the second rib is detected; and
- a controller configured to control rotation of the rotating tray according to the first and second signals.

2. The multi-wavelength detecting apparatus of claim 1, further comprising a fourth optical filter coupled to the rotating tray, arranged along the first circumference, and configured to transmit light of a different wavelength from the wavelengths of light transmitted by the first, second, and third optical filters,
- wherein the first optical filter, the second optical filter, the third optical filter, and the fourth optical filter are arranged such that respective centers thereof are spaced an equal interval of angle A apart from each other, and
- wherein respective centers of the first rib and the second rib are spaced an interval of angle A part from each other.

3. The multi-wavelength detecting apparatus of claim 2,
- wherein respective centers of the first optical filter, the second optical filter, the third optical filter, and the fourth optical filter are spaced an interval of 90° apart from each other, and
- wherein respective centers of the first rib and the second rib are spaced an interval of 90° apart from each other.

4. The multi-wavelength detecting apparatus of claim 2 or 3, further comprising:
- a driving motor; and
- a driving gear coupled to the driving motor to rotate, wherein the rotating tray has gear teeth formed on the outer peripheral surface of the rotating tray so as to rotate in engagement with the driving gear.

5. The multi-wavelength detecting apparatus of claim 4, wherein the driving motor is formed as a step motor and configured to rotate the rotating tray by a multiple of angle A.

6. The multi-wavelength detecting apparatus of claim 4 or 5,
- wherein the first rib and the second rib protrude in parallel to the rotation axis from an edge of the rotating tray, and
- wherein each of the first detection sensor and the second detection sensor comprises:
- a light-emitting unit;
- a light-receiving unit configured to receive light from the light-emitting unit; and
- a detection space as a space between the light-emitting unit and the light-receiving unit, the first and second ribs moving in the detection space.

7. The multi-wavelength detecting apparatus of any one of the preceding claims, wherein the first rib and the second rib are continuously connected to each other.

8. The multi-wavelength detecting apparatus of any one of claims 2 to 6,
- wherein the first rib and the second rib are continuously formed arranged in a range of angle A about the rotation axis, and
- wherein the first rib and the second rib are connected to each other.

9. The multi-wavelength detecting apparatus of any one of claims 2 to 6 or 8, wherein respective centers of the first detection sensor and the second detection sensor are positioned to be spaced apart from the first optical axis by angle A or angle 2A about the rotation axis.

10. The multi-wavelength detecting apparatus of any one of claims 4 to 6,
- wherein the first rib and the second rib protrude in parallel to the first optical axis from an edge of the rotating tray, and
- wherein each of the first detection sensor and the second detection sensor comprises:
- a light-emitting unit;
- a light-receiving unit configured to receive light from the light-emitting unit; and
- a detection space as a space between the light-emitting unit and the light-receiving unit, the first and second ribs moving in the detection space.

11. The multi-wavelength detecting apparatus of any one of the preceding claims, wherein the first optical filter is arranged on the first optical axis in case that the first signal indicates off and the second signal indicates on,
- wherein the second optical filter is arranged on the first optical axis in case that the first signal indicates on and the second signal indicates off, and
- wherein the third optical filter is arranged on the first optical axis in case that the first signal and the second signal indicate on.

12. The multi-wavelength detecting apparatus of any one of claims 2 to 6 or 8 to 10, wherein the first optical filter is arranged on the first optical axis in case that the first signal and the second signal indicate off,
- wherein the second optical filter is arranged on the first optical axis in case that the first signal indicates off and the second signal indicates on,
- wherein the third optical filter is arranged on the first optical axis in case that the first signal and the second signal indicate on, and
- wherein the fourth optical filter is arranged on the first optical axis in case that the first signal indicates on and the second signal indicates off.

13. The multi-wavelength detecting apparatus of one of the preceding claims, further comprising:
- a light source configured to emit light; and
- a second condenser lens configured to concentrate light from the light source such the light is emitted to the test kit.
